## Europäisches Patentamt

**European Patent Office**

**Office européen des brevets**

(11) Veröffentlichungsnummer: **0 199 902**

**A1**

(12) **EUROPÄISCHE PATENTANMELDUNG**

(21) Anmeldenummer: **86101400.9**

(22) Anmeldetag: **04.02.86**

(51) Int. Cl.⁴: **F 01 K 23/06**
**F 02 C 3/20**

(30) Priorität: **29.04.85 CH 1805/85**

(43) Veröffentlichungstag der Anmeldung:
**05.11.86 Patentblatt 86/45**

(84) Benannte Vertragsstaaten:
**AT BE DE FR GB IT NL SE**

(71) Anmelder: **GEBRÜDER SULZER AKTIENGESELLSCHAFT**
**Zürcherstrasse 9**
**CH-8401 Winterthur(CH)**

(72) Erfinder: **Aguet, Emile**
**Zinzikerbergstrasse 9**
**CH-8404 Winterthur(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) Kombinierte Heissluftturbinen-Dampfkraftanlage.

㊼ Der Dampferzeuger (10) weist eine Wirbelbettfeuerung (11) auf, an die sich ein Rauchgaszug (14) anschliesst. Ein von einer Heissluftturbine (20) angetriebener Luftverdichter (21) ist austrittsseitig über einen vollständig im Wirbelbett (11) angeordneten Luftwärmeübertrager (15) mit der Heissluftturbine verbunden, deren Austritt an einen Abluftkessel (30) angeschlossen ist. Ein Wasser-Dampftrenngefäss (50) ist zwischen einem im Dampferzeuger (10) angeordneten Verdampfersystem (17,18) und einem ebenfalls im Dampferzeuger angeordneten Ueberhitzer (16) geschaltet. Im Abluftkessel (30) ist ein Vorüberhitzer (33) angeordnet, der eintrittsseitig mit dem Wasser-Dampftrenngefäss (50) und austrittsseitig mit dem Ueberhitzer (16) kommuniziert.

Hierdurch werden bei guter Ausnützung der Abluftwärme die Druckverluste zwischen Luftverdichter und Heissluftturbine verringert.

P.5951 Stph

Gebrüder Sulzer Aktiengesellschaft, Winterthur, Schweiz

---

## Kombinierte Heissluftturbinen-Dampfkraftanlage

Die Erfindung betrifft eine kombinierte Heissluftturbinen-Dampfkraftanlage mit einem eine Wirbelbettfeuerung und an diese anschliessend einen Rauchgaszug aufweisenden Dampferzeuger mit mindestens einem von einer Heissluftturbine angetriebenen Luftverdichter, dessen Austritt über mindestens einen im Dampferzeuger angeordneten Luftwärmeübertrager mit dem Eintritt der Heissluftturbine kommuniziert, deren Austritt an mindestens einen Abluftkessel angeschlossen ist, mit mindestens einem Wasser-Dampftrenngefäss, das zwischen einem im Dampferzeuger angeordneten Verdampfersystem und einem ebenfalls im Dampferzeuger angeordneten Ueberhitzer geschaltet ist, dessen Austritt mit dem Eintritt einer Dampfturbine verbunden ist.

Bei einer bekannten Anlage dieser Art wird durch Koppelung der Turbinen mit elektrischen Generatoren hauptsächlich elektrische Energie erzeugt, und zwar mit einem höheren Wirkungsgrad als reine Gas- oder reine Dampfkraftanlagen. Ein wesentliches Merkmal dieser Anlage ist die Verwertung der Wärmeenergie der aus der Heissluftturbine austretenden Abluft, die zuerst in einem Rekuperator Wärme an die im Luftverdichter verdichtete Luft abgibt und danach im Abluftkessel zur Vorwärmung des Speisewassers verwendet wird. Der dem Rekuperator nachgeschaltete Luftvorwärmer ist in drei Abschnitte unterteilt, von denen der erste und der dritte im Rauchgaszug und der zweite in der Wirbelbettfeuerung angeordnet sind. Ein Nachteil dieser bekannten Anlage ist der lange, mit vielen Umlenkungen behaftete Weg der verdichteten Luft zwischen dem Luftverdichteraustritt und dem Eintritt der Heissluftturbine, der grosse Druckverluste verursacht und das Erreichen eines noch höheren Wirkungsgrades beeinträchtigt.

Es ist Aufgabe der Erfindung, auf einfache und kostengünstige Weise die Druckverluste zwischen dem Austritt des Luftverdichters und dem Eintritt der Heissluftturbine zu verringern, ohne dabei auf eine gute Ausnützung der Abluftwärme zu verzichten.

Diese Aufgabe wird erfindungsgemäss dadurch gelöst, dass im Abluftkessel mindestens ein Vorüberhitzer angeordnet ist, dessen Eintritt mit dem Dampfaustritt des Wasser-Dampftrenngefässes und dessen Austritt mit dem Eintritt des Ueberhitzers kommuniziert, und dass der Luftwärmeübertrager im wesentlichen vollständig im Wirbelbett angeordnet ist.

In der neuen Anlage wird ein wesentlicher Teil der Abluftwärme zur Vorüberhitzung des Dampfes verwendet, wobei aus der Wirbelbettfeuerung genügend Wärme zur vollständigen Vorwärmung der verdichteten Luft zur Verfügung steht, so dass auf den bisher üblichen Rekuperator verzichtet werden kann. Dadurch werden die Druckverluste zwischen Luftverdichter und Heissluftturbine beachtlich herabgesetzt. Ein weiterer Vorteil der Erfindung ergibt sich aus einer besseren Ausnützung der Wärme in der Wirbelbettfeuerung, da die Lufttemperatur am Austritt des Luftwärmeübertragers näher bei der Temperatur des Wirbelbettes liegt als in der bekannten Anlage. Dies bedeutet eine zusätzliche Verbesserung des gesamten Wirkungsgrades der Anlage.

Die Erfindung lässt sich sowohl auf Anlagen mit Zwangumlauf-Dampferzeuger als auch mit Zwangdurchlauf- oder Naturumlauf-Dampferzeuger anwenden. Die Erfindung ermöglicht eine grosse Freiheit in der Anordnung der Heizflächen innerhalb des Dampferzeugers, indem sämtliche dampfführenden Wärmeübertrager (Ueberhitzer, Zwischenüberhitzer) nun ausserhalb des Wirbelbettes angeordnet werden können; sie bleiben also von den Angriffen durch höhere Temperatur, chemische Korrosion und Verschleiss im Wirbelbett verschont. Im Wirbelbett befinden sich somit nur die weniger heiklen, luft- und speisewasserführenden Wärmeübertrager.

Bevorzugte Anordnungen von Heizflächen des Dampferzeugers sind in den Ansprüchen 2 und 4 gekennzeichnet.

Gemäss Anspruch 5 wird die Restwärme der Rauchgase aus dem Dampferzeuger zur Vorwärmung der dem Wirbelbett zuzuführenden Luft verwendet, wobei durch vorherige Zufuhr von warmer Abluft laut Anspruch 6 Tieftemperaturkorrosion im Luftvorwärmer vermieden wird. Die Anordnung einer relativ kleinen Hilfsbrennkammer nach dem Luftvorwärmer laut Anspruch 7 dient der Vorwärmung des Bettmaterials beim Anfahren, das also dadurch erleichtert wird.

- 4 -

Nach Anspruch 8 wird der beim Anfahren erzeugte Dampf benützt, um die Heissluftturbine auf die sich selbsterhaltende Mindestdrehzahl zu bringen. Bei Teillast verhindert die Hilfsdampfturbine ein frühzeitiges Abschalten der Heissluftturbine.

Anspruch 9 kennzeichnet eine bevorzugte relative Luftmenge, die ein günstiges Verhältnis der Speisewasser- bzw. Dampfmenge zur Abluftmenge gewährleistet, so dass der Verlauf der Temperaturen des heizenden und des beheizten Mediums günstig wird.

Durch die Ablassmittel gemäss Anspruch 10 ist es möglich, beim Anfahren der Heissluftturbine deren Drehzahl von der Mindestdrehzahl bis zur Synchronisationsdrehzahl unter Kontrolle zu halten.

- 5 -

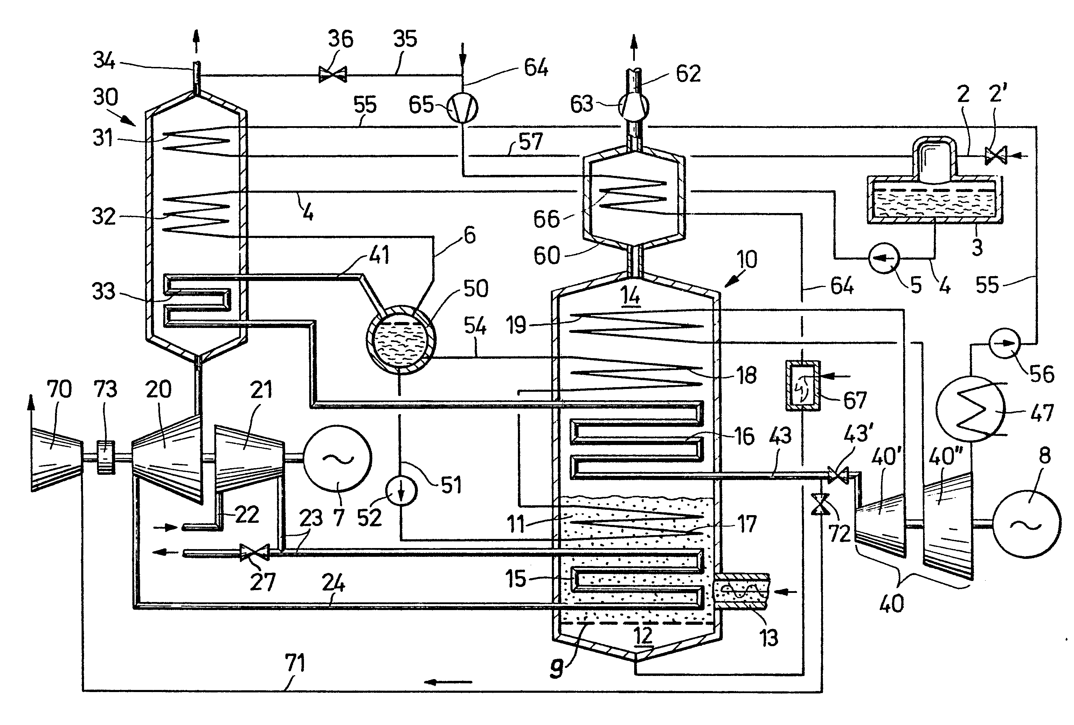

Ein bevorzugtes Ausführungsbeispiel der Erfindung wird in der folgenden Beschreibung anhand der Zeichnung näher erläutert, die ein Schema der erfindungsgemässen Anlage zeigt.

Die kombinierte Heisslufturbinen-Dampfkraftanlage enthält einen Zwangumlauf-Dampferzeuger 10, eine Heisslufturbine 20, die über eine gemeinsame Welle mit einem Luftverdichter 21 und mit einem ersten elektrischen Generator 7 gekuppelt ist, einen Abluftkessel 30, eine aus Hochdruckstufe 40' und Niederdruckstufe 40" bestehende Dampfturbine 40, die mit einem zweiten elektrischen Generator 8 gekoppelt ist, eine Wasser-Dampftrommel 50 und einen Luftvorwärmer 60. Der Dampferzeuger 10 wird von einem Wirbelbett 11 beheizt, in dem fossile, feste Brennstoffe verbrannt werden, die mittels einer Dosierschnecke 13 zusammen mit ebenfalls festen chemischen Zusätzen zur Reinigung der Abgase eingetragen werden. Das Wirbelbett wird mittels strömender Luft erzeugt, die über einen perforierten Boden 9 aus einem Luftkasten 12 zugeführt wird. Diese Luft dient gleichzeitig als Verbrennungsluft, wobei zusätzlich - zur Verbesserung der Verbrennungsbedingungen - Sekundärluft in die Wirbelschicht oder oberhalb dieser in den Dampferzeuger 10 eingeführt werden kann, was hier nicht gezeigt ist. An das Wirbelbett 11 schliesst sich nach oben ein Rauchgaszug 14 an. Im Wirbelbett 11 sind in seinem untersten Bereich ein Luftwärmeübertrager 15 und darüber ein erster Verdampfer 17 angeordnet. Im Rauchgaszug 14 sind in dessen untersten, heissesten Bereich ein Dampfüberhitzer 16; darüber ein zweiter Verdampfer 18, der arbeitsmittelseitig mit dem ersten Verdampfer 17 in Reihe geschaltet ist, und zuoberst, im kühlsten Bereich des Rauchgaszuges 14, ein Zwischenüberhitzer 19 vorgesehen.

Der Luftverdichter 21 ist über eine Luftzufuhrleitung 22 mit der Atmosphäre und sein Austritt über eine Druckluftleitung 23 mit dem Luftwärmeübertrager 15 durchgehend verbunden. Die Druckluftleitung 23 lässt sich ausserdem zwecks Entlastung über ein Ablassventil 27 mit der Atmosphäre verbinden. Eine Heissluftleitung 24 verbindet den Austritt des Luftwärmeübertragers 15 mit der Heissluftturbine 20, deren Austritt an den vertikalen Abluftkessel 30 angeschlossen ist. Dieser Kessel weist in seinem heissesten Bereich einen Vorüberhitzer 33 für Dampf, in seinem kältesten Bereich einen Kondensatvorwärmer 31 und dazwischen einen Speisewasservorwärmer 32 auf. Eine Luftabfuhrleitung 34 verbindet den obersten Bereich des Abluftkessels 30 entweder mit der Atmosphäre oder mit weiteren Verbrauchern für etwaige Restwärme der Abluft, wie zum Beispiel Heizungssysteme von Gebäuden. Der Luftverdichter 21 ist so ausgelegt, dass die von ihm geförderte Luftmenge etwa 2,5 mal grösser ist als die für die Verbrennung im Wirbelbett 11 nötige stöchiometrische Luftmenge, so dass ein guter Wirkungsgrad der Anlage gewährleistet ist.

Eine Dampfleitung 41 verbindet einen Dampfaustritt der Wasser-Dampftrommel 50 mit dem Eintritt des Vorüberhitzers 33, der austrittsseitig an den Eintritt des Dampfüberhitzers 16 angeschlossen ist. Eine ein Turbinenventil 43' aufweisende Dampfleitung 43 führt vom Austritt des Dampfüberhitzers 16 zur Hochdruckstufe 40' der Dampfturbine 40. Zwischen der Hochdruckstufe 40' und der Niederdruckstufe 40" ist der Zwischenüberhitzer 19 eingeschaltet. Der Austritt der Niederdruckstufe 40" mündet in einen Kondensator 47.

Der Kondensator 47 ist über eine eine Kondensatpumpe 56 aufweisende Leitung 55 mit dem Kondensatvorwärmer 31 ver- bunden, dessen Austritt über eine Leitung 57/dem obersten Teil eines Entgasers 3 kommuniziert. Eine mit einem Ventil 2' versehene Nachfülleitung 2 mündet ebenfalls in den obersten Teil des Entgasers 3, dessen unterer Bereich über eine eine Speisewasserpumpe 5 enthaltende Speisewasserleitung 4 an den Speisewasservorwärmer 32 angeschlossen ist. Der Vorwärmer 32 steht über eine Leitung 6 mit der Wasser-Dampftrommel 50 in Verbindung. Eine Umwälzpumpe 52 ist in einer Leitung 51 vorgesehen, die den untersten Bereich der Wasser-Dampftrommel 50 mit dem ersten Verdampfer 17 verbindet; der zweite Verdampfer 18 ist ausgangsseitig über eine Leitung 54 mit der Wasser-Dampftrommel 50 verbunden.

Der Luftvorwärmer 60 steht einerseits über eine Rauchgasleitung mit dem obersten Ende des Rauchgaszuges 14 und andererseits über eine ein Rauchgasgebläse 63 aufweisende Rauchgasabfuhrleitung 62 entweder mit der Atmosphäre oder mit hier nicht gezeigten Anlagen zur weiteren Verwertung der Restwärme der Rauchgase in Verbindung; es können noch Rauchgasreinigungseinrichtungen zwischengeschaltet sein. Eine Brennluftleitung 64, die luftseitig stromoberhalb des Luftvorwärmers 60 ein Luftgebläse 65 und im Luftvorwärmer 60 eine Heizfläche 66 aufweist, führt zum Luftkasten 12. Sie enthält zwischen diesem und der Heizfläche 66 eine Hilfsbrennkammer 67. Stromoberhalb des Luftgebläses 65 ist die Brennluftleitung 64 über eine Abzweigleitung 35 mit der Luftabfuhrleitung 34 verbunden; in der Abzweigleitung 35 ist ein Steuerorgan 36 vorhanden.

Eine Hilfsdampfturbine 70 ist über eine Hilfsdampfleitung 71, die ein Dampfventil 72 aufweist, mit der Dampfleitung 43 verbunden, und zwar zwischen dem Austritt des Ueberhitzers 16 und dem Turbinenventil 43'. Sie ist

- 8 -

ferner mittels einer Kupplung 73 an die Heissluftturbine 20 kuppelbar.

Im Normalbetrieb funktioniert die Anlage wie folgt, wobei das Turbinenventil 43' offen und das Dampfventil 72 geschlossen sind und die Hilfsbrennkammer 67 ausser Betrieb ist. Das Gebläse 65 saugt Luft aus der Atmosphäre an und fördert sie über die Brennluftleitung 64 und die Vorwärmerheizfläche 66 in den Luftkasten 12. Das Steuerorgan 36 ist dabei so eingestellt, dass durch die Abzweigleitung 35 ein Teil der in der Luftabfuhrleitung 34 strömenden Luft zur Brennluftleitung 64 fliesst und die angesaugte Brennluft genügend vorwärmt, um Tieftemperaturkorrosion im Luftgebläse 65 und im Luftvorwärmer 60 zu verhindern. Ueber den perforierten Boden 9 tritt die Brennluft in das Wirbelbett 11. Die Dosierschnecke 13 führt in das Wirbelbett die nötigen Brennstoff- und Chemikalienmengen ein; die Chemikalien binden die bei der Verbrennung produzierten schädlichen Stoffe. Die Rauchgase werden mit Hilfe des Rauchgasgebläses 63 durch den Rauchgaszug 14 und den Luftvorwärmer 60 zur Rauchgasabfuhrleitung 62 gefördert, unter Abgabe ihres Wärmeinhalts an das Arbeitsmittel in den Heizflächen 16, 18 und 19 sowie an die Luft in der Heizfläche 66.

Der Luftverdichter 21 saugt über die Luftzufuhrleitung 22 ebenfalls Luft aus der Atmosphäre an, verdichtet sie und fördert sie über die Druckluftleitung 23 zum Luftwärmeübertrager 15, wobei das Ablassventil 27 geschlossen ist. Im Wärmeübertrager 15 nimmt die Druckluft Wärme aus dem Wirbelbett 11 auf und gelangt dann über die Heissluftleitung 24 in die Heissluftturbine 20. Nach ihrer Entspannung in der Heissluftturbine 20 strömt die Luft zum Abluftkessel 30 und gibt dort der Reihe nach Wärme an das Arbeitsmittel in den Heizflächen 33, 32 und 31 ab. Danach verlässt die bis nahe der Umgebungstemperatur abgekühlte Luft den Abluftkessel 30 über die Luftabfuhrleitung 34.

Die Kondensatpumpe 56 fördert Kondensat über die Leitung 55 und den Kondensatvorwärmer 31 in den Entgaser 3. Eventuelle Wasser- und/oder Dampfverluste der beschriebenen Anlage werden durch Zusatz von Frischwasser zum Entgaser ersetzt, das durch Betätigen des Ventils 2' über die Nachfülleitung 2 zugeführt wird. Das im Entgaser 3 entgaste Wasser wird mittels der Speisewasserpumpe 5 über den Speisewasservorwärmer 32 in die Wasser-Dampftrommel 50 gepumpt. Die Umwälzpumpe 52 fördert das Speisewasser aus der Wasser-Dampftrommel 50 zum ersten Verdampfer 17, in dem es Wärme aus dem Wirbelbett 11 aufnimmt und anfängt zu verdampfen. Es gelangt dann zum zweiten Verdampfer 18, in dem es durch Aufnahme von Wärme aus den Rauchgasen noch weiter verdampft, und schliesslich über die Leitung 54 zurück zur Wasser-Dampftrommel 50. Hier trennt sich das Wasser vom Dampf und letzterer strömt über die Leitung 41 zum Vorüberhitzer 33, wo seine Temperatur durch Wärmeaufnahme aus der Abluft erhöht wird. Im Dampfüberhitzer 16 nimmt der Dampf aus dem Rauchgas weitere Wärme auf und strömt mit der Endtemperatur zur Hochdruckstufe 40'. Nach teilweiser Entspannung in dieser Stufe wird der Dampf im Zwischenüberhitzer 19 durch Wärmeaufnahme aus dem Rauchgas wieder überhitzt und dann in der Niederdruckstufe 40" weiter entspannt. Der aus dieser Stufe austretende Dampf wird im Kondensator 47 niedergeschlagen und von dort aus, wie beschrieben, als Kondensat wieder in den Prozess eingeleitet. Die Dampfturbine 40 treibt den zweiten Generator 8 an, der, wie der erste Generator 7, elektrischen Strom zur allgemeinen Anwendung produziert.

Beim Anfahren werden zuerst das Rauchgas- und das Luftgebläse 63 bzw. 65 sowie die Hilfsbrennkammer 67 in
Betrieb genommen, wobei das Wirbelbett 11 erzeugt und
vorgewärmt wird. Dann werden nacheinander die Umwälzpumpe 52 gestartet, das Wirbelbett 11 gezündet und die
Dosierschnecke 13 eingeschaltet. Die Hilfsbrennkammer
67 kann dann abgestellt werden. Sobald eine ausreichende
Dampfmenge verfügbar ist, wird das Dampfventil 72 geöffnet und das Turbinenventil 43' mindestens teilweise
geschlossen. Ueber die Hilfsdampfleitung 71 wird somit
Dampf der Hilfsdampfturbine 70 zugeführt, die mittels
der Kupplung 73 mit der Heissluftturbine 20 gekuppelt
wird und diese solange antreibt, bis sie ihre Mindestdrehzahl erreicht hat. Dabei ist das Ablassventil 27
mindestens teilweise offen, so dass mindestens ein Teil
der vom Luftverdichter 21 produzierten Druckluft - statt
durch den Luftwärmeübertrager 15 zu strömen - wieder in
die Atmosphäre gelangt. Auf diese Weise wird verhindert,
dass das Aufwärmen des Wirbelbettes 11 infolge Abkühlung
durch die Druckluft verzögert wird; zugleich wird die
Hilfsdampfturbine 70 entlastet. Beim Erreichen der
Mindestdrehzahl der Heissluftturbine 20 wird die Hilfsdampfturbine abgekuppelt, das Dampfventil 72 geschlossen und das Turbinenventil 43' gegebenenfalls etwas geöffnet. Das Ablassventil 27 wird dabei etwas in Schliessrichtung bewegt, bleibt aber, um die Drehzahl der Heissluftturbine 20 unter Kontrolle zu halten, weiterhin in
Betrieb, bis die Synchrondrehzahl des ersten Generators
7 erreicht ist.

Alle übrigen Komponenten der Anlage werden auf bekannte,
hier nicht weiter erläuterte Art in Betrieb genommen.

Abweichend vom beschriebenen Ausführungsbeispiel ist es
möglich, die Anzahl und die Verteilung der Heizflächen sowohl im Dampferzeuger 10 als auch im Abluftkessel 30
in Abhängigkeit von den Auslegungsparametern zu ändern.
Die Dampfturbine 40 kann - statt zweistufig - auch nur
einstufig oder aber dreistufig sein und mit oder ohne
Zwischenüberhitzung ausgerüstet sein. Es ist ebenfalls
möglich, Umleitungen zum Ausschalten gewisser Heizflächen vorzusehen, so dass zum Beispiel ein Wasservorwärmer oder ein Verdampfer erst in einer späteren Phase
des Anfahrens in Betrieb genommen wird. Je nach Betriebsart und Auslegung der Anlage, kann auf Pumpen
verzichtet bzw. können mehr Pumpen nötig werden. Anstelle eines statischen Wirbelbettes, ist es möglich, eine
zirkulierende Wirbelschicht anzuwenden. Die Feststoffteilchen können auch anders als mittels einer Dosierschnecke 13 in das Wirbelbett 11 eingebracht werden.
Unter Umständen kann auch die dem Wirbelbett zugeführte
Luft aus anderen Quellen als der gezeigten Quelle bezogen werden, wobei die Zuführung der Verbrennungs- und
der Verwirbelungsluft getrennt erfolgen kann. Auf das
Rauchgasgebläse 63 kann eventuell verzichtet werden.
Anstelle der Hilfsdampfturbine 70 kann eine andere Antriebsart zum Anfahren der Heisslufturbine 20 verwendet
werden, insbesondere kann dazu der Generator 7 als Motor
geschaltet werden.

Sicherheitshalber können Pumpen und Regelorgane mehrfach
redundant, in Serie oder parallelgeschaltet, vorgesehen
werden.

Es ist auch zweckmässig, die Verdampfer 17 und 18 - statt
als konvektive Heizflächen innerhalb des Dampferzeugers
10 - als Wandheizflächen mit über Stege miteinander verbundenen Rohren vorzusehen, welche Wandheizflächen die
Begrenzungswände des Wirbelbettes 11 und des Rauchgaszuges 14 bilden.

Die Hilfsdampfturbine 70 wird - ausser beim Anfahren - auch bei sehr niedrigen Lasten eingesetzt, um ein frühzeitiges Abschalten der Heisslufturbine zu verhindern, wodurch eine rasche Lasterhöhung möglich wird.

Bei Ausbildung des Dampferzeugers als Zwangdurchlaufkessel tritt an die Stelle der Wasser-Dampftrommel ein Wasserabscheider, dessen Wasserauslass z.B. zum Entgaser des Speisewassersystems geführt werden kann. Bei sog. Combined circulation-Dampferzeugern wird mindestens ein Teil des im Wasserabscheider abgeschiedenen Wassers mittels Umwälzpumpe zwischen Speisepumpe und Verdampfereintritt zurückgeführt.

Gebrüder Sulzer AG                    P.5951 Stph


P a t e n t a n s p r ü c h e

1. Kombinierte Heissluftturbinen-Dampfkraftanlage mit einem eine Wirbelbettfeuerung und an diese anschliessend einen Rauchgaszug aufweisenden Dampferzeuger, mit mindestens einem von einer Heisslufturbine angetriebenen Luftverdichter, dessen Austritt über mindestens einen im Dampferzeuger angeordneten Luftwärmeübertrager mit dem Eintritt der Heisslufturbine kommuniziert, deren Austritt an mindestens einen Abluftkessel angeschlossen ist, mit mindestens einem Wasser-Dampftrenngefäss, das zwischen einem im Dampferzeuger angeordneten Verdampfersystem und einem ebenfalls im Dampferzeuger angeordneten Ueberhitzer geschaltet ist, dessen Austritt mit dem Eintritt einer Dampfturbine verbunden ist, dadurch g e k e n n - z e i c h n e t,  dass im Abluftkessel mindestens ein Vorüberhitzer angeordnet ist, dessen Eintritt mit dem Dampfaustritt des Wasser-Dampftrenngefässes und dessen Austritt mit dem Eintritt des Ueberhitzers kommuniziert,  und dass der Luftwärmeübertrager im wesentlichen vollständig im Wirbelbett angeordnet ist.

2. Anlage nach Anspruch 1, dadurch gekennzeichnet, dass der Vorüberhitzer im heissesten Bereich des Abluftkessels angeordnet ist.

3. Anlage nach Anspruch 1 oder 2, dadurch gekennzeichnet, dass mindestens ein Zwischenüberhitzer im Rauchgaszug angeordnet ist.

4. Anlage nach einem der Ansprüche 1 bis 3, dadurch gekennzeichnet, dass das Verdampfersystem aus mindestens einem im Wirbelbett angeordneten, vom Arbeitsmittel zuerst durchströmten Verdampfer und mindestens einem im Rauchgaszug angeordneten zweiten Verdampfer besteht.

5. Anlage nach einem der Ansprüche 1 bis 4, dadurch gekennzeichnet, dass ein Gebläse vorhanden ist, das Luft aus der Atmosphäre über die Primärseite eines Luftvorwärmers in die Wirbelbettfeuerung bläst, und dass die Sekundärseite dieses Luftvorwärmers am Austritt des Rauchgaszuges angeschlossen ist.

6. Anlage nach Anspruch 5, dadurch gekennzeichnet, dass der Austritt des Abluftkessels über ein Steuerorgan mit dem Eintritt des Gebläses verbunden ist.

7. Anlage nach Anspruch 5 oder 6, dadurch gekennzeichnet, dass zwischen dem Luftvorwärmer und der Wirbelbettfeuerung eine Hilfsbrennkammer angeordnet ist.

8. Anlage nach einem der Ansprüche 1 bis 7, dadurch gekennzeichnet, dass der Austritt des Ueberhitzers ausser mit der Dampfturbine über ein Steuerorgan mit einer Hilfsdampfturbine verbunden ist, die mit der Heissluftturbine kuppelbar ist.

9. Anlage nach einem der Ansprüche 1 bis 8, dadurch gekennzeichnet, dass der Luftverdichter so ausgelegt ist, dass die von ihm geförderte Luftmenge mindestens zweimal so gross ist wie die zur Verbrennung des Brennstoffes in der Wirbelbettfeuerung benötigte stöchiometrische Luftmenge.

10. Anlage nach einem der Ansprüche 1 bis 9, dadurch gekennzeichnet, dass zwischen dem Austritt des Luftverdichters und dem Eintritt der Heissluftturbine
Mittel zum gesteuerten Ablassen von verdichteter Luft
in die Atmosphäre angeordnet sind.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 050 687 (SULZER) <br> * Zusammenfassung; Seite 3, Zeilen 1-30; Seite 4, Zeilen 12-16; Figur 1 * | 1,4 | F 01 K 23/06 <br> F 02 C 3/20 |
| A | GB-A-2 076 062 (THE ENGLISH ELECTRIC CO.) <br> * Zusammenfassung; Seite 1, Zeilen 3-25, 41-49, 88-101, 120-128; Seite 2, Zeilen 3-6, 12-17; Figur 1 * | 1,2,6-8 | |
| A | US-A-4 253 300 (WILLYOUNG) <br> * Zusammenfassung; Seite 2, Spalte 2, Zeilen 55-66; Seite 3, Spalte 3, Zeilen 37-59 und Spalte 4, Zeilen 36-38; Figur 1 * | 1-3 | |
| A | DE-A-3 127 733 (SULZER) | | RECHERCHIERTE SACHGEBIETE (Int Cl 4) |
| A | US-A-3 069 342 (ESCHER WYSS) | | F 01 K <br> F 02 C |
| A | GB-A-1 300 949 (ROLLS ROYCE) | | |

Der vorliegende Recherchenbericht wurde für alle Patentansprüche erstellt

| Recherchenort <br> DEN HAAG | Abschlußdatum der Recherche <br> 20-05-1986 | Prüfer <br> ERNST J.L. |
|---|---|---|